# EUROPEAN PATENT APPLICATION

(11) **EP 2 586 291 A1**
(43) Date of publication of application: **01.05.2013**
(21) Application number: 12189576.7
(22) Date of filing: 23.10.2012
(51) Int. Cl.: A01G 27/02, A01G 27/06

(54) **Flower pot for plants with a water reservoir and with recovery of the evaporated water**

(30) Priority: 27.10.2011 IT GE20110123
(71) Applicant: Parodi, Giuseppe, 16164 Genova (IT)
(72) Inventor: Parodi, Giuseppe, 16164 Genova (IT)
(74) Representative: Porsia, Attilio

(57) **Abstract**

Flower pot for plants with a water reservoir and comprising an outer housing (1) made of material which is impermeable to the water retained in the compost (4), wherein the flower pot, at its bottom, underneath said compost (4), contains means (2; 11; 12; 14; 16, 17) suitable for delimiting a retaining space of the water reservoir (10), said means being suitable for transferring the reservoir water (10) to the above compost (4) by capillarity.

## Description

The present invention relates to flower pots for plants and more particularly to flower pots for plants which are provided with a water reservoir.

Flower pots for plants with a water reservoir are known, see for example patent application JP 8 140509 (A). These known systems are based on the use of traps or of similar elements immersed in a water reservoir retained in a flower pot holder, which transfer the water to the above soil by capillarity.

Also known are flower pots for plants with a water reservoir which are provided with a complex system for pumping the water from the tank of the reservoir to the plant, see for example patent application CN 101057546 (A).

Patent application US 2002/0046492 relates to a flower pot in which the water reservoir is retained between pumice fragments. Pumice cannot guarantee the required supply of water to the plant inasmuch as the fragments of pumice have a poor capacity for transferring the required water by capillarity both because of their own nature and because of the fact that the contact between one fragment and the other is effected over greatly reduced surfaces.

Patent application WO 2011/040741 relates to a flower pot provided at a certain distance from the bottom with a dividing plate for retaining the reservoir water. This water is transferred to the above compost by capillarity. The space of the water reservoir has an overfill element. The mode of operation cannot be readily understood.

All of these known systems are complex and expensive and can easily experience malfunctioning problems which render them unsuitable for the purpose for which they were intended.

Moreover, none of these known systems provides means for recovering the water which evaporates from the soil.

It is an object of the present invention, therefore, to provide a flower pot for plants with a water reservoir according to Claim 1 which both operates in a safe and reliable manner and is of limited cost.

It is a further object of the present invention to provide a flower pot for plants according to Claim 1 which is provided with means for recovering the water of evaporation.

Further objects and advantages of the present invention will become more apparent over the course of the following description of a number of preferred embodiments thereof, provided with reference to the accompanying drawings, in which:
Figure 1 shows a longitudinal section through a flower pot according to a first embodiment of the present invention;
Figure 2 schematically shows a second embodiment of the flower pot according to the invention, according to which the flower pot has a drainage aperture on the wall, at a certain height from the bottom, and the element for collecting the water is constituted by a rigid synthetic sponge;
Figure 3 is a variant of the flower pot shown in Figure 1, in which the flower pot has a drainage aperture on the wall, analogously to the flower pot shown in Figure 2;
Figure 4 shows a further embodiment, according to which a bell-shaped element provided with an aperture for the passage of a probe is positioned at the bottom of the flower pot;
Figure 5 is a variant according to which the flower pot is produced with two chambers for protecting the roots.

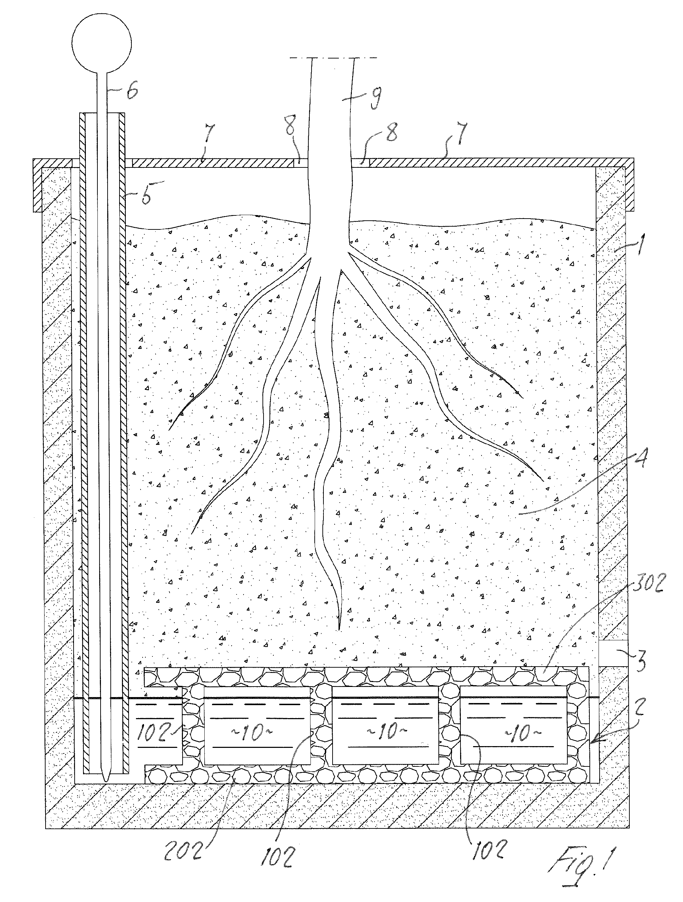

With reference firstly to Figure 1, 1 denotes the flower pot itself. The flower pot 1 may be made with any material suitable for the purpose, but advantageously it is produced from plastic material by means of moulding. The shape of the flower pot, too, may be as desired. However, the preferred shape for the purposes described hereinbelow is that of rectangular bowls.

The bottom of the flower pot 1 is provided with a hollow brick element 2, which covers substantially the entire bottom of said flower pot 1. Advantageously, this element 2 is constituted by a fragment of a commercially available hollow flat tile or of a commercially available hollow tile, comprising a bottom wall 202 and a top wall 302 separated from one another by a series of plates 102 so as to delimit tubular spaces 10 for the purposes which will be described hereinbelow. These hollow tiles have a thickness of between 6 and 8 centimetres and a length of between 40 and 200 centimetres. It goes without saying that these brick elements can easily be cut so as to adapt the length and the width to the flower pot into which they are to be introduced. The thickness thereof can also be halved, if use is made of "divisible" hollow tiles.

At a height corresponding substantially to the level of the height of the top wall 302 of the hollow brick 2 from the bottom of the flower pot 1, the flower pot 1 has an aperture 3, for the purposes which will be described hereinbelow. 4 denotes the compost which fills the flower pot 1 above the top wall 302 of the hollow tile 2. 5 denotes a tube which extends from a level above the free surface of the compost 5 as far as the bottom of the flower pot 1, passing through an aperture made in the hollow tile 2. This tube 5 houses a probe 6, for the purposes which will be described hereinbelow.

The whole system is completed by tiles 7 made of plastic material or the like which are fitted on the top of the flower pot 1 and are provided with opposing semi-apertures 8 for the passage of the stalk 9 of the plants planted in the flower pot.

The mode of operation of the cultivation system described is clear. Through the tube 5, or by percolation through the layer of compost 6, water is fed into the spaces 10 at the bottom of the flower pot 1, filling the spaces 10 which are formed between the plates 102 of the hollow brick 2. If there is surplus water, this can escape from the overfill aperture 3. At this point, the brick 2 provides the compost 4 with the water it needs by capillarity. By means of the probe 6, it is possible to detect the level of water in the reservoir spaces 10 at the bottom of the flower pot 1. Owing to the presence of the tiles 7, the water vapour which evaporates from the compost 4 is stopped in its ascent, and in part is made to condensate upon contact with the tiles 7, and the drops of condensated water are made to flow back into the flower pot 1, thereby significantly increasing the water autonomy of the flower pot 1 itself.

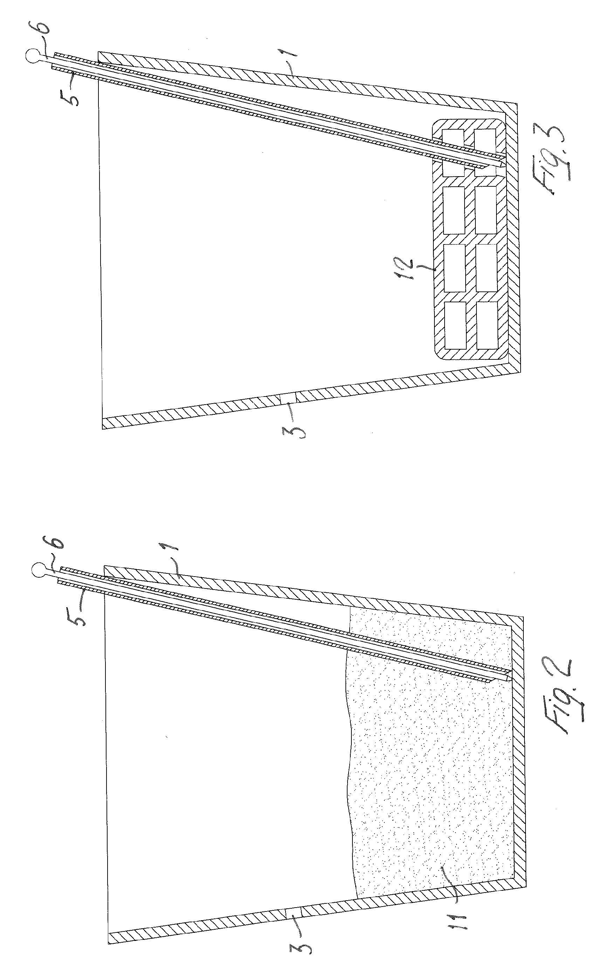

The embodiment of the flower pot according to the invention which is shown in Figure 2 differs from that in Figure 1 mainly in that, instead of the brick element 2, a layer 11 of a rigid synthetic sponge, such as that known under the name vermiculite or the like, has been arranged at the bottom of the flower pot.

The embodiment of the flower pot according to the invention which is shown in Figure 3 is very similar to that in Figure 1. In this embodiment, a hollow tile 12 or the like is positioned at the bottom of the receptacle 1, which is advantageously formed by a bowl of a certain length.

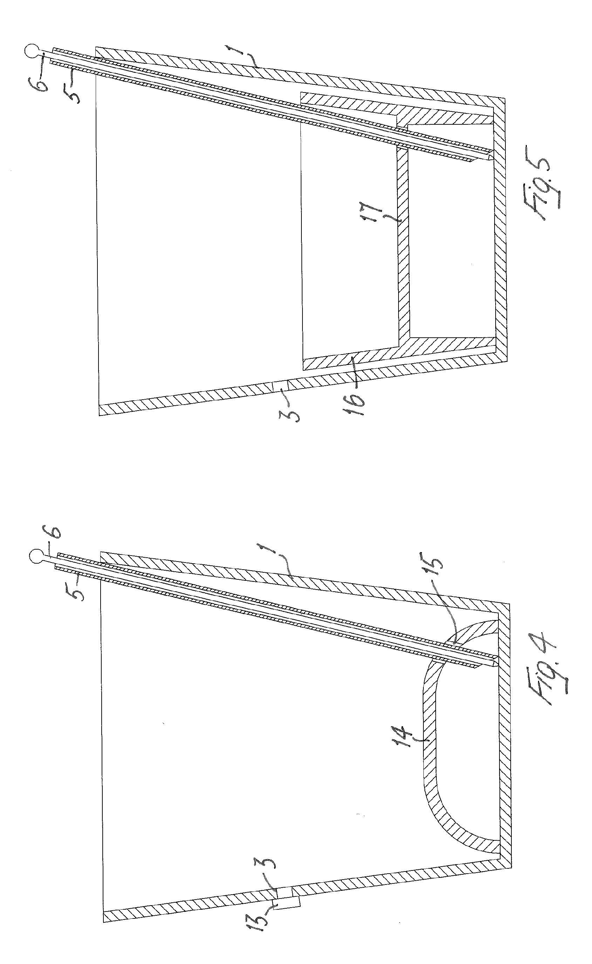

The embodiment of the flower pot according to the invention which is shown in Figure 4 differs from that in Figure 1 mainly in that, instead of the brick element 2, a bell-shaped brick manufactured product 14, provided with a side aperture 15 for the passage of the probe 5, has been arranged at the bottom of the flower pot.

The embodiment of the flower pot according to the invention which is shown in Figure 5 differs from that in Figure 1 mainly in that, instead of the brick element 2, a frustoconical brick element 16 is inserted into the flower pot, extending to a height which is approximately half the height of the flower pot 1 and having a dividing plate 17 approximately at half its height. The purpose of this device is that of preventing the roots of the plant from becoming too wet.

It goes without saying that the present invention is not limited to the embodiments shown and described. Thus, for example, the overfill aperture 3 may be omitted, for example, in flower pots intended for the interior of houses.

The tiles 7 may in turn be hinged to the edge of the flower pot 1, instead of being in the form of tiles which simply rest on said edge. These can advantageously be made of plastic material.

The tube 5 may also be omitted, as can the probe 6, too.

Moreover, in addition to being made of plastic material, the flower pot 1 can also be made of other materials which are impermeable to water, such as ceramics or the like.

Finally, flower pots without the overfill aperture 3 can be provided with a manual discharge plug, positioned at the top of the flower pot, depending on the overflow pipe, which can be used in the case of heavy or torrential rain.

Therefore, the present invention is not limited to the embodiments shown and/or described, but encompasses all such variants and modifications as lie within the broader scope of the inventive concept, substantially as claimed below.

## Claims

1. Flower pot for plants with a water reservoir and comprising an outer housing (1) made of material which is impermeable to the water retained in the compost (4), **characterized in that**, at its bottom, underneath said compost (4), it contains means (2; 11; 12; 14; 16, 17) suitable for delimiting a retaining space of the water reservoir (10), said means being suitable for transferring the reservoir water (10) to the above compost (4) by capillarity.

2. Flower pot according to Claim 1, wherein said outer housing (1) is made of plastic material.

3. Flower pot according to the preceding claims, wherein the side wall of said flower pot (1) has an overfill aperture (3) at a level corresponding substantially to the level of said retaining space of the water reservoir (10).

4. Flower pot according to any one of the preceding claims, further comprising a tubular element (5), which extends from a level above the free surface of the compost (4) as far as the bottom of the flower pot (1) and which houses a probe (6) for measuring the level of the water present in the reservoir spaces (10).

5. Flower pot according to Claim 1, wherein said means suitable for delimiting a retaining space of the water reservoir (10) are constituted by a hollow tile (2; 12) or by a fragment thereof, or by a hollow brick or similar brick elements.

6. Flower pot according to Claim 1, wherein said means suitable for delimiting a retaining space of the water reservoir (10) are constituted by a rigid synthetic sponge (11).

7. Flower pot according to Claim 1, wherein said means suitable for delimiting a retaining space of the water reservoir (10) are constituted by a bell-shaped brick element (14) resting on the bottom of the flower pot (1).

8. Flower pot according to Claim 7, wherein said bell-shaped element (14) is perforated for the passage of a tubular element (5).

9. Flower pot according to Claim 1, wherein said means suitable for delimiting a retaining space of the water reservoir (10) are constituted by a frustoconical brick element (16) provided with a dividing plate (17) for retaining the roots of the plant (9).

10. Flower pot according to any one of the preceding claims, **characterized in that** the flower pot (1) has tiles (7) made of waterproof material at the top, said tiles being suitable for covering as a whole or in part the top of the flower pot (1), for the partial recovery of the water of evaporation.

11. Flower pot according to Claim 10, wherein said tiles (7) are made of plastic material.

12. Flower pot according to the preceding Claims 10 and 11, wherein said tiles are hinged to the edges of the flower pot (1).

13. Flower pot according to Claim 10, wherein said tiles (7) have, on their edge protruding towards the inside of the flower pot, semicircular symmetrical notches (8) for the passage of the stalk (9) of the plants.
